# FASCICULE DE BREVET EUROPEEN

(11) **EP 2 531 393 B1**
(45) Date de publication et mention de la délivrance du brevet: **15.10.2014**
(21) Numéro de dépôt: 11707698.4
(22) Date de dépôt: 31.01.2011
(51) Int. Cl.: B62K 3/00, B62K 15/00

(54) **VEHICULE A DEUX ROUES DEPLIABLE**
AUSZIEHBARES ZWEIRÄDRIGES FAHRZEUG
EXTENSIBLE TWO-WHEELED VEHICLE

(30) Priorité: 02.02.2010 FR 1050715
(43) Date de publication de la demande: 12.12.2012
(73) Titulaire: Ghisolfi, Richard, 69100 Villeurbanne (FR); Ghisolfi, Alain, 69100 Villeurbanne (FR)
(72) Inventeur: Ghisolfi, Richard, 69100 Villeurbanne (FR); Ghisolfi, Alain, 69100 Villeurbanne (FR)
(74) Mandataire: Jeannet, Olivier
(86) Numéro de dépôt international: PCT/IB2011/050423
(87) Numéro de publication internationale: WO 2011/095931

(56) Documents cités:
- WO-A1-02/46032
- WO-A1-03/093093
- DE-A1- 10 045 821
- DE-A1- 10 204 478
- FR-A1- 2 822 794

## Description

La présente invention concerne un véhicule à deux roues dépliable.

Il est connu de concevoir des véhicules à deux roues dépliables. L'encombrement de tels véhicules à l'état replié reste toutefois important, ce qui est un inconvénient notable dans certaines situations, par exemple pour prendre des transports en commun, pour voyager, ou pour assister à certains évènements ou manifestations. De plus, la manipulation permettant de déplier le véhicule n'est pas toujours très aisée à opérer.

Les documents FR 2 822 794 et DE 100 45 821 décrivent des véhicules à deux roues selon l'art antérieur. Le préambule de la revendication 1 annexée est basé sur le document FR 2 822 794.

La présente invention a pour objectif principal de remédier aux inconvénients des véhicules existants, en fournissant un véhicule à deux roues dépliable pouvant être replié sous un faible volume et aisé à manipuler.

Par ailleurs, il n'existe pas à ce jour de récipient bien adapté au transport d'un véhicule à deux roues dépliable, et le transport d'objets au moyen d'un tel véhicule n'est pas aisé avec les véhicules existants.

La présente invention a aussi pour objectif de remédier à ces inconvénients, en fournissant un ensemble incluant un véhicule à deux roues dépliable et un récipient permettant une combinaison avantageuse de ce véhicule et de ce récipient.

Le véhicule à deux roues concerné comprend une plate-forme sur laquelle un utilisateur peut prendre place, un ensemble de direction comprenant une colonne de direction située sur l'avant de la plate-forme et une roue arrière située à l'arrière de la plate-forme.

Selon l'invention,
- la plate-forme est en deux parties, à savoir une partie avant et une partie arrière mobile par rapport à la partie avant, cette partie arrière étant mobile entre une position de repliage, dans laquelle elle est rétractée par rapport à la partie avant, et une position de dépliage, dans laquelle elle est située dans le prolongement de la partie avant ;
- la colonne de direction comprend une partie inférieure et au moins une partie supérieure dépliable et repliable de manière télescopique par rapport à la partie inférieure ; et
- le véhicule inclut une transmission entre ladite partie avant de la plate-forme et ladite partie supérieure de la colonne de direction, agencée de telle sorte que le dépliage de la partie arrière de la plate-forme réalise le dépliage de la partie supérieure de la colonne de direction et, inversement, que le repliage de la partie supérieure de la colonne de direction réalise le repliage de la partie arrière de la plate-forme.

Le véhicule selon l'invention a ainsi un volume réduit à l'état replié, lui permettant d'être facilement transporté. Il est de plus apte à passer très facilement de son état de dépliage à son état de repliage et inversement.

De préférence, la partie arrière de la plateforme comprend un ensemble arrière pivotant sur lequel est montée la roue arrière du véhicule, cet ensemble étant mobile entre une position de repliage, dans laquelle il est rabattu du côté de ladite partie arrière, et une position de dépliage dans laquelle il se positionne sensiblement dans le prolongement de cette partie arrière, les positions de repliage et de dépliage de cet ensemble correspondant respectivement aux positions de repliage et de dépliage du véhicule.

Cet ensemble arrière pivotant permet, en position de repliage, d'augmenter encore la compacité du véhicule dans cette position.

Selon une forme de réalisation préférée de l'invention :
- l'ensemble arrière pivotant comprend deux bras montés pivotants sur deux branches solidaires de ladite partie arrière de la plateforme ; la roue arrière est montée entre ces deux bras, du côté des extrémités arrières de ceux-ci, et ces bras comportent, du côté de leurs extrémités avant, des extensions de verrouillage ;
- lesdites branches comportent un verrou monté coulissant sur elles, comprenant deux cavités propres à recevoir lesdites extensions de verrouillage dans la position de dépliage de l'ensemble arrière pivotant, ce verrou étant sollicité dans une position de verrouillage par des moyens élastiques ; le verrou est mobile longitudinalement sur lesdites branches entre cette position de verrouillage, dans laquelle il est apte à recevoir lesdites extensions de verrouillage dans lesdites cavités, réalisant de ce fait le verrouillage de l'ensemble arrière pivotant en position de dépliage, et une position d'effacement, dans laquelle il libère lesdites extensions de verrouillage desdites cavités et ne fait ainsi pas obstacle au pivotement desdits bras ;
- l'ensemble arrière pivotant comprend un organe de commande du verrou, actionné par ladite transmission.

De préférence, cet organe de commande du verrou est une came pivotante, non liée en pivotement auxdits bras sur un premier secteur de son mouvement de pivotement et liée en pivotement auxdits bras sur un deuxième secteur de son mouvement de pivotement, ce deuxième secteur étant consécutif au premier secteur ; cette came est conformée pour, au cours de son mouvement de pivotement sur ledit premier secteur, actionner le verrou de sa position de verrouillage vers sa position d'effacement, et, au cours de son mouvement de pivotement sur ledit deuxième secteur, entraîner lesdits bras en pivotement.

Le pivotement de la came sur ledit premier secteur est donc un pivotement d'actionnement du verrou tandis que le pivotement de la came sur ledit deuxième secteur est un pivotement d'entraînement des bras en pivotement.

De préférence, ladite transmission comprend un câble relié à ladite partie avant du véhicule, dont une première partie s'étend le long des parties avant et arrière de la plateforme, passe sur ladite came pivotante et est fixée à celle-ci, et dont une deuxième partie s'étend, depuis le point de fixation du câble sur la came, à nouveau le long des parties avant et arrière de la plateforme, pénètre ensuite dans la colonne de direction, forme un mouflage sur une poulie supérieure que comporte ladite partie inférieure de cette colonne de direction puis est reliée à la partie inférieure de ladite partie supérieure de cette colonne de direction ; à partir de la position de repliage du véhicule, le déplacement de ladite partie arrière de la plateforme par rapport à ladite partie avant de la plateforme vers sa position de dépliage exerce tout d'abord une traction sur ladite première partie du câble, provoquant le pivotement de la came sur ledit premier secteur, puis, à partir de l'arrivée de la came dans ledit deuxième secteur, le pivotement de l'ensemble arrière pivotant ; à partir de cette arrivée de la came dans ce deuxième secteur, le déplacement de ladite partie arrière de la plateforme exerce également une traction sur ladite deuxième partie du câble, réalisant ainsi le dépliage télescopique de la partie supérieure de la colonne de direction par rapport à la partie inférieure de celle-ci.

Inversement, à partir de la position dépliée du véhicule, une pression sur ladite partie supérieure de la colonne de direction réalise une traction sur ladite deuxième partie du câble, laquelle provoque le pivotement de la came sur ledit premier secteur du mouvement de cette came, qui réalise l'actionnement du verrou en position d'effacement, et donc le déverrouillage du pivotement de l'ensemble arrière pivotant, et simultanément le déplacement de ladite partie arrière de la plate-forme en position de repliage par rapport à ladite partie avant de la plate-forme.

Le véhicule peut comprendre une partie de colonne de direction déployable manuellement, en particulier la partie de colonne de direction reliée au guidon.

Avantageusement, le véhicule comprend un guidon formé par un tube relié perpendiculairement à la colonne de direction, ce guidon comprenant une partie fixe et une partie mobile, dépliable et repliable par rapport à cette partie fixe.

Cette possibilité de dépliage/repliage du guidon permet de gagner encore en compacité.

L'invention concerne aussi l'ensemble formé :
- du véhicule précité, qui comprend en outre une première partie de montage permettant le montage sur lui d'un récipient, notamment de type cartable ou sacoche, et
- de ce récipient, qui comprend une deuxième partie de montage, apte à coopérer avec ladite première partie de montage pour permettre le montage sur le véhicule dudit récipient.

Selon une forme de réalisation préférée de l'invention, dans ce cas :
- le véhicule comprend une extension solidaire de l'avant de la plateforme, et ladite première partie de montage est aménagée sur cette extension, et
- le récipient comprend des cotés longs et des côtés courts, et ladite deuxième partie de montage est aménagée au niveau de la partie inférieure de l'un des côtés longs du récipient, sensiblement au centre de ce côté long,
le récipient étant ainsi apte à être monté sur le véhicule avec ses côtés longs s'étendant transversalement au plan avant-arrière du véhicule.

Un positionnement équilibré du récipient sur le véhicule est ainsi réalisé, et le récipient n'empiète pas ou peu sur la plateforme.

De préférence, le récipient comprend un compartiment apte à recevoir le véhicule en position de repliage.

Le véhicule peut ainsi être facilement rangé dans le récipient en vue de son transport.

L'invention sera bien comprise, et d'autres caractéristiques et avantages de celle-ci apparaîtront, en référence au dessin schématique annexé, représentant, à titre d'exemple non limitatif, une forme de réalisation préférée du véhicule qu'elle concerne.
La figure 1 en est une vue de côté, dans une position de complet repliage ;
la figure 2 en est une vue similaire à la figure 1, en coupe longitudinale ; un câble de transmission que comprend le véhicule est omis, par souci de clarté du dessin ;
la figure 2A est une vue à échelle agrandie du détail entouré d'un cercle sur la figure 2 ;
la figure 3 en est une vue similaire à la figure 2, à l'état entièrement déplié, ledit câble de transmission étant représenté ; un tube de direction que comprend le véhicule a été omis sur cette vue, par soucis de clarté ;
la figure 3A est une vue à échelle agrandie du détail entouré d'un cercle sur la figure 3 ;
la figure 4 est une vue en perspective éclatée d'un ensemble arrière pivotant, qu'il comprend ;
la figure 4A est une vue de face d'un verrou que comprend le véhicule, par la face de ce verrou tournée vers l'arrière du véhicule ;
la figure 4B est une vue de ce verrou de face, par la face de ce verrou tournée vers l'avant du véhicule ;
la figure 5 est une vue partielle du véhicule, de dessus ;
la figure 6 en est une vue de côté en coupe selon la ligne médiane VI-VI de la figure 5, ledit câble de transmission n'étant pas représenté ;
les figures 7 à 9 en sont des vues de côté, respectivement dans une première position intermédiaire de dépliage, dans une deuxième position intermédiaire de dépliage, et dans une position de complet dépliage ;
la figure 10 est une vue en perspective d'un récipient de type cartable ou sacoche pouvant être adapté sur le véhicule ;
la figure 11 est une vue partielle, en perspective, d'une partie du véhicule servant au montage du récipient, une chaussure d'un utilisateur étant représentée en traits interrompus ;
la figure 12 est une vue de côté de l'ensemble formé par le véhicule et par le récipient monté sur celui-ci, avec également une chaussure d'un utilisateur représentée en traits interrompus ;
les figures 13 à 16 sont des vues respectivement de côté, de face par l'avant, de dessus et de face par l'arrière d'une variante de réalisation du guidon, les poignées que comporte ce guidon étant représentées en position déployée sur les figures 13 et 14 et en position repliée sur les figures 15 et 16 ;
la figure 17 est une vue du guidon de dessus, avec coupe longitudinale d'un corps central que comprend ce guidon, les poignées étant en position déployée ;
la figure 18 est une vue du guidon similaire à la figure 17, en éclaté, et
la figure 19 en est une vue similaire à la figure 17, les poignées étant en position repliée.

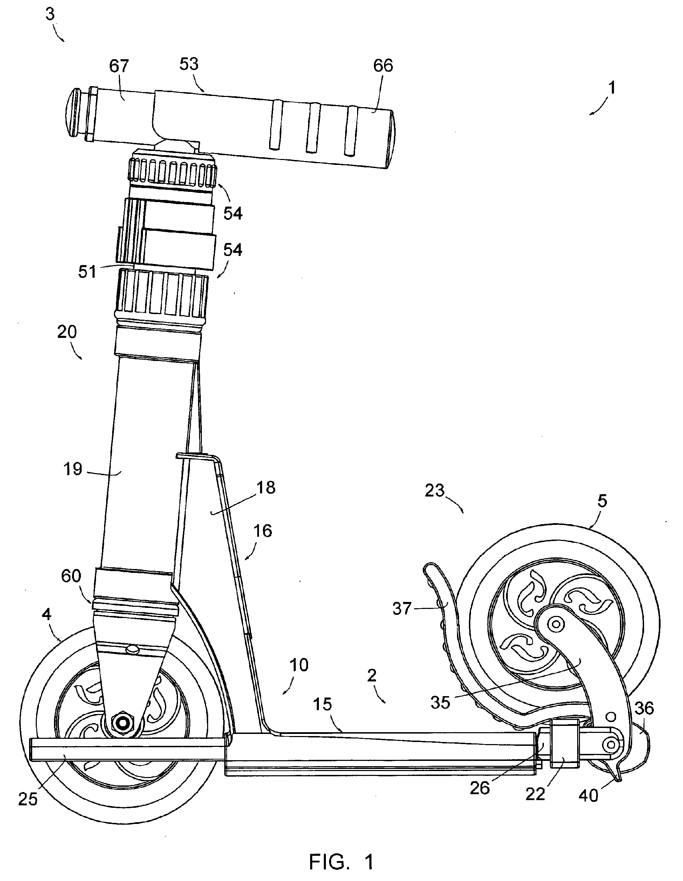

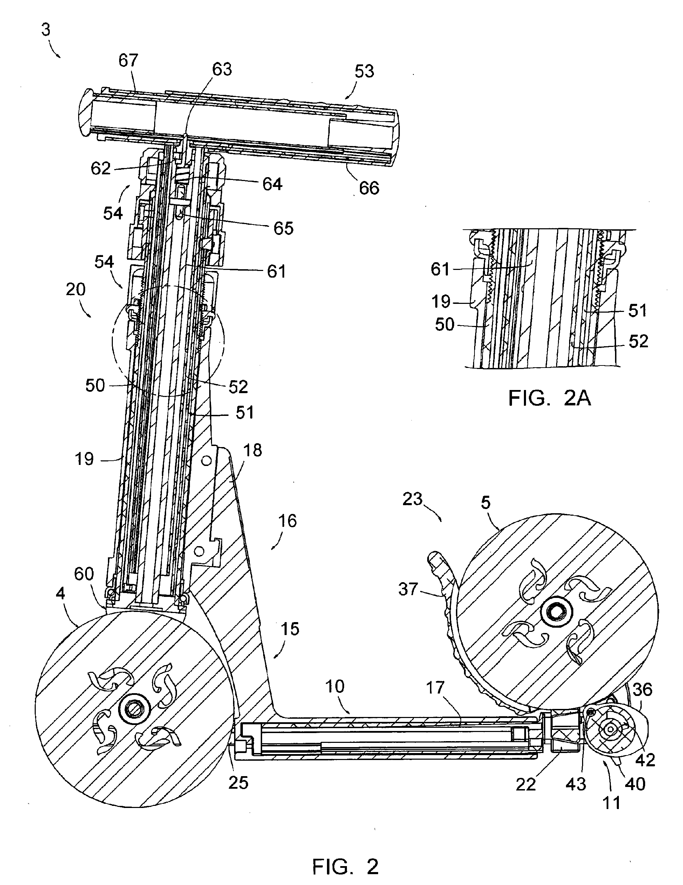

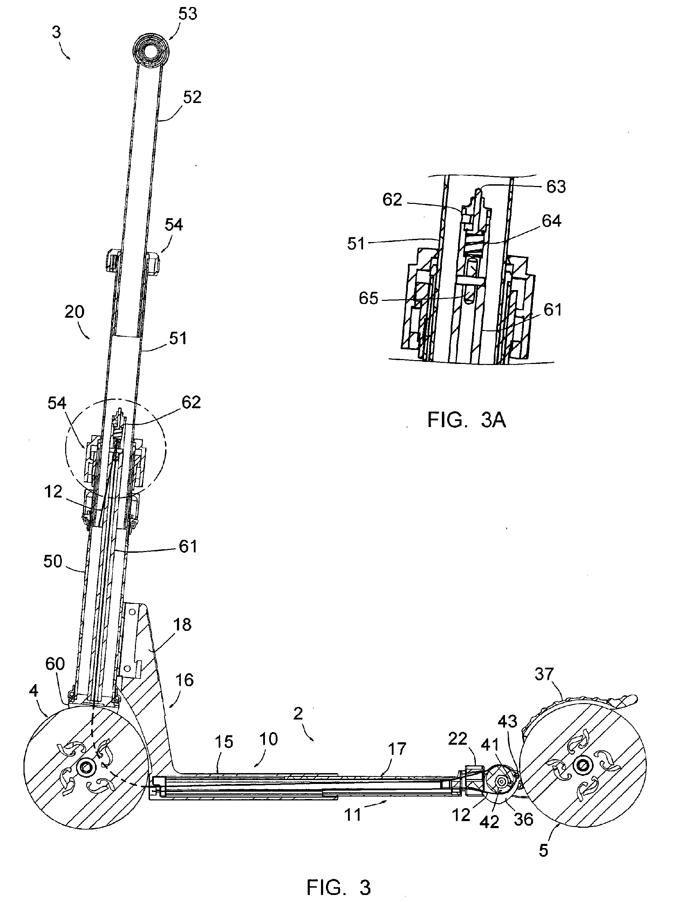

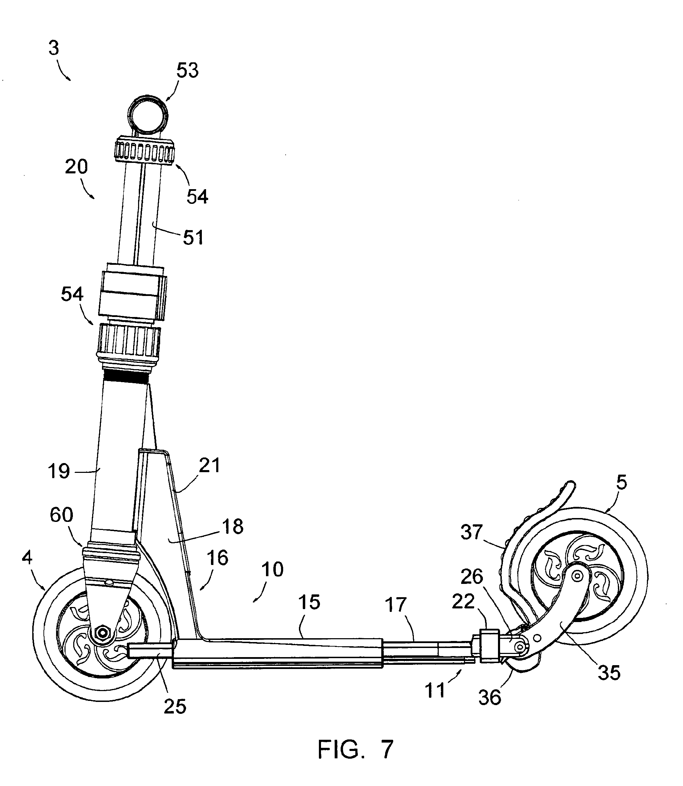

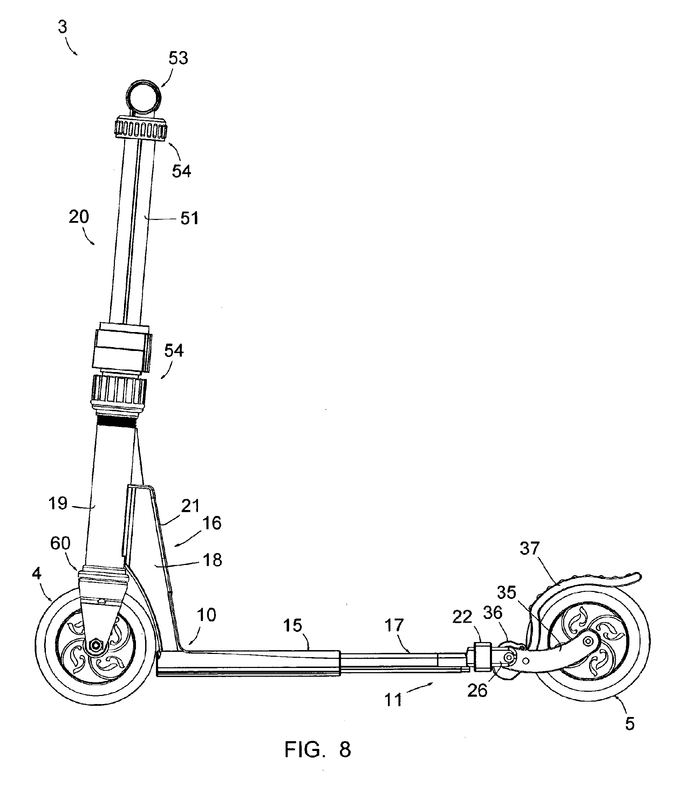

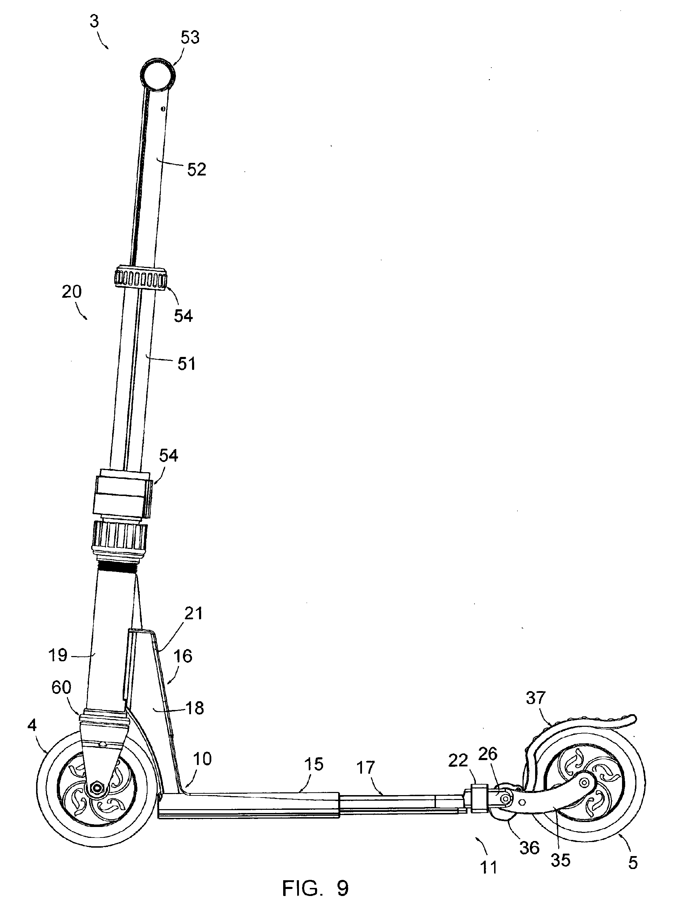

Les figures 1 à 9 et 12 représentent un véhicule à deux roues dépliable 1, de type trottinette, pouvant adopter, en position de complet repliage, la configuration montrée sur les figures 1 et 2, et, en position de complet dépliage, la configuration montrée sur les figures 3 et 9.

Ce véhicule 1 comprend une plate-forme 2 sur laquelle un utilisateur peut prendre place, un ensemble 3 de direction d'une roue avant 4, situé sur l'avant de la plate-forme 2, et une roue arrière 5 située à l'arrière de la plate-forme 2.

Comme cela se comprend en comparant ces figures, le véhicule 1 inclut un ensemble avant 10 et un ensemble arrière 11 coulissant par rapport à l'ensemble avant 10, et l'ensemble de direction 3 comprend un tube 51 déployable téléscopiquement. Il comprend en outre un câble 12 (cf. figure 3) formant une transmission qui permet de coordonner les mouvements de dépliage et repliage des ensembles avant 10 et arrière 11 avec les mouvements de dépliage et repliage du tube 51 de l'ensemble de direction 3.

L'ensemble avant 10 comprend une partie avant de plateforme 15 et une potence de direction 16.

La partie avant de plateforme 15 est creuse intérieurement et reçoit en elle à coulissement une partie arrière de plateforme 17 faisant partie de l'ensemble arrière 11. Cette partie arrière 17 est mobile entre une position de repliage (cf. figures 1 et 2), dans laquelle elle est rétractée à l'intérieure de la partie avant 15, et une position de dépliage, dans laquelle elle fait saillie de cette partie avant 15, en étant située dans le prolongement de celle-ci. Des moyens élastiques (non représentés sur les figures par souci de clarté), en particuliers un vérin ou un ou plusieurs ressorts, sont interposés entre la partie avant 15 et la partie arrière 17, sollicitant cette dernière dans ladite position de dépliage.

La potence 16 comprend un pied 18 solidaire de la partie avant 15 et un tube 19 formant le palier de guidage du pivotement de la colonne de direction 20 que comprend l'ensemble de direction 3. Le tube 19 comprend une nervure longitudinale arrière formant un crochet inférieur, au moyen de laquelle il peut être accroché au pied 18.

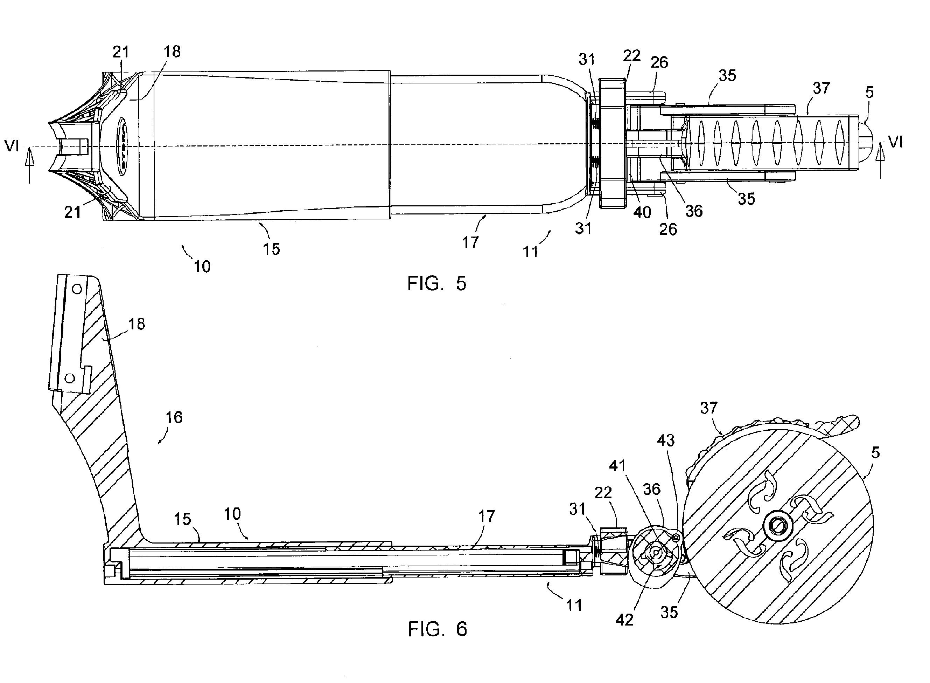

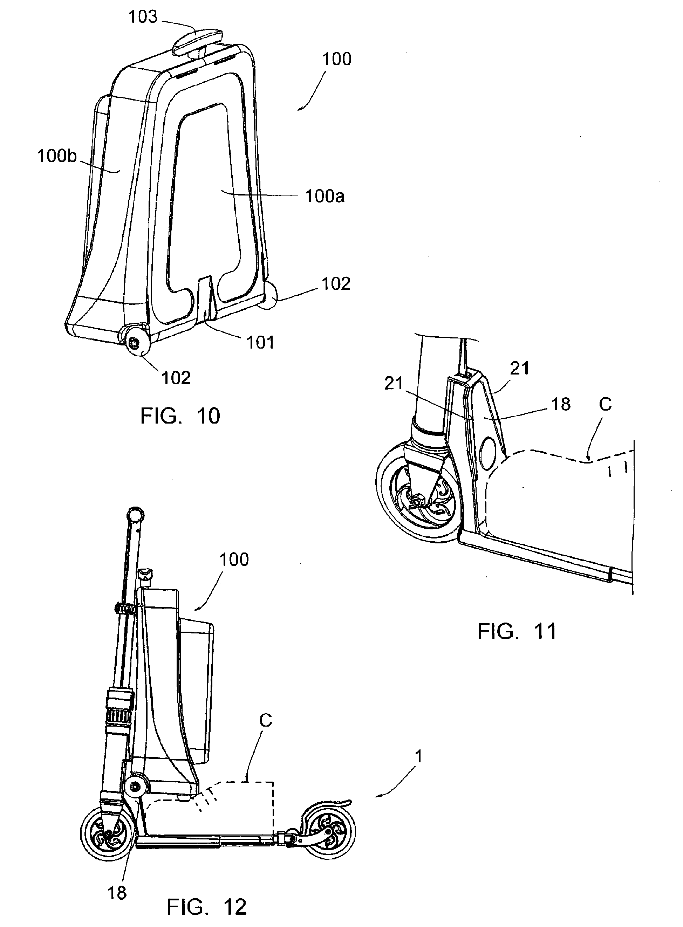

Ainsi que le montre les figures 5 et 11, le pied 18 présente une forme sensiblement triangulaire et comprend deux nervures saillantes supérieures latérales 21. Ces nervures 21 forment une première partie de montage permettant le montage sur le pied 18 du récipient 100 de type cartable ou sacoche représenté sur la figure 10, qui sera décrit plus loin. Ce pied 18 a une hauteur telle qu'une chaussure C d'un utilisateur peut être engagée entre le récipient 100 et la plateforme 2, comme visible sur la figure 12 et ainsi que cela sera reprécisé plus loin.

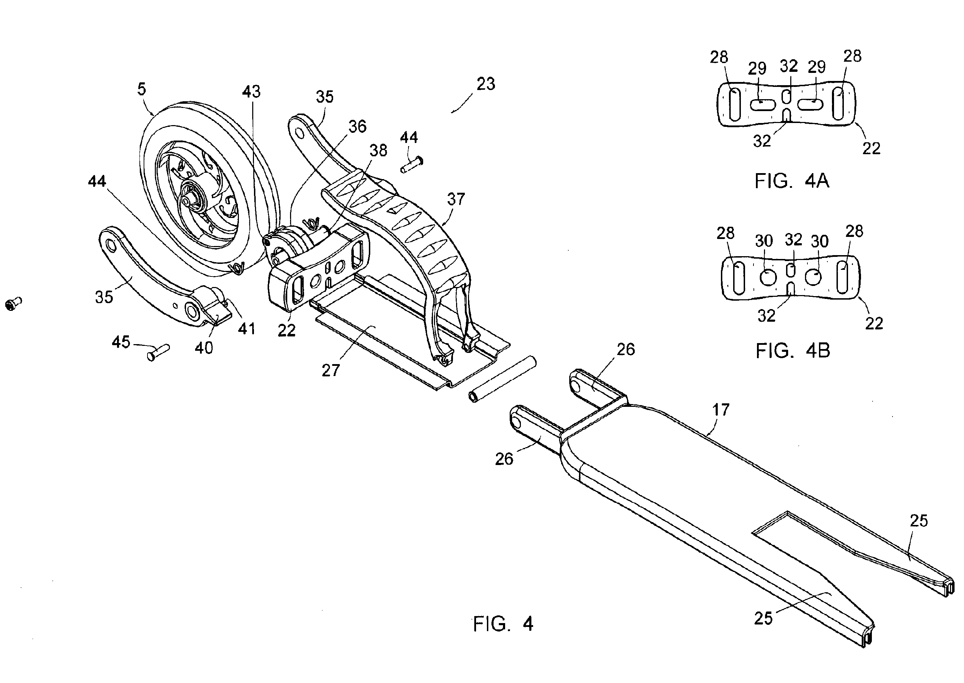

L'ensemble arrière 11, plus particulièrement visible sur les figures 4 à 6, comprend ladite partie arrière de plateforme 17, un bloc 22 formant verrou et un ensemble arrière pivotant 23.

La partie arrière 17 comprend deux extensions avant 25 (cf. figure 4), permettant d'augmenter la portée de cette partie arrière 17 contre la partie avant 15 en position de dépliage et s'engageant de part et d'autre de la roue avant 4 en position de repliage. La partie arrière 17 comprend également deux branches 26 parallèles entre elles, solidaires de son extrémité arrière, et est fermée, en partie inférieure, par une plaque de fond 27.

Le verrou 22 est engagé à coulissement sur les branches 26, grâce à des ouvertures latérales 28 qu'il comprend à cet effet. Il comprend en outre deux cavités de verrouillage 29 débouchant dans sa face tournée vers l'arrière du véhicule 1 (cf. figure 4A), destinées à recevoir des extensions de verrouillage 40 de l'ensemble arrière pivotant 23, et deux cavités circulaires 30, débouchant dans sa face tournée vers l'avant du véhicule 1 (cf. figure 4B), destinées à recevoir des ressorts 31 interposés entre le verrou 22 et ladite partie arrière de plateforme 17. Ces ressorts 31 sollicitent le verrou 22 vers une position arrière normale, dans laquelle lesdites extensions de verrouillage 40 sont aptes à être engagées de manière ajustée dans lesdites cavités de verrouillage 29 et à être retenues dans ces cavités. Le verrou 22 peut cependant coulisser sur les branches 26, vers une position située sur le côté avant du véhicule 1, à l'encontre de la force élastique des ressorts 31, dans laquelle lesdites extensions de verrouillage 40 sont libérées des cavités de verrouillage 29.

Le verrou 22 comprend enfin des conduits médians 32 permettant le passage du câble 12 autour d'une came pivotante 36 que comprend l'ensemble arrière pivotant 23.

Ce dernier comprend essentiellement deux bras 35 montés pivotants sur les deux branches 26, la roue arrière 5 montée entre ces deux bras 35, la came pivotante 36 précitée, et un frein 37.

Les deux bras 35 comportent, du côté de leurs extrémités avant, au-delà de leurs axes de pivotement, lesdites extensions de verrouillage 40. Chacun de ces bras 35 comporte également un pivot intérieur avant, le long duquel est aménagée une nervure 41 faisant saillie radialement du pivot (cf. figure 4). Les nervures 41 des deux bras 35 sont destinées à être engagées avec jeu dans une lumière en arc de cercle 42 que comprend la came pivotante 36.

Cette came 36 est montée entre les deux bras 35, sur la même broche 38 que celle permettant le montage de ces bras sur les branches 26. Elle comprend une gorge périphérique de réception, autour d'elle, du câble 12 (cf. figure 3), et comprend une broche transversale 43 permettant d'immobiliser ce câble 12 en coulissement par rapport à elle. Comme cela se comprend en comparaison des figures 2 et 3 ou 6, cette came 36 est apte, au cours de son pivotement, à agir sur le verrou 22 à l'encontre de la force élastique des ressorts 31, de manière à faire passer ce dernier de sa position arrière normale précitée, dans laquelle les extensions 40 sont engagées dans les cavités 29 du verrou 22, à sa position avant précitée, de libération de ces extensions 40 par rapport à ces cavités 29.

La lumière 42 s'étend sur un arc de cercle centré sur l'axe de pivotement de la came 36, de l'ordre de 80 degrés, et est délimitée angulairement par des faces radiales d'extrémités aptes à coopérer avec lesdites nervures 41 que comprennent les pivots des bras 35. Il se comprend que, par le jeu desdites nervures 41 dans ladite lumière 42, la came 36 est non liée en pivotement aux bras 35 sur un premier secteur de son mouvement de pivotement, tant que les nervures 41 ne sont pas venues rencontrer la face radiale correspondante de la came délimitant la lumière 42 ; cette came 36 est ensuite liée en pivotement aux bras 35 sur un deuxième secteur de son mouvement de pivotement, consécutif au premier secteur, lorsque les nervures 41 sont venues rencontrer cette face radiale correspondante.

Comme cela se comprend également, la came 36 est en outre conformée pour, au cours de son mouvement de pivotement sur ledit premier secteur, actionner le verrou 22 depuis la position arrière normale de ce verrou vers la position avant de celui-ci, puis, au cours de son mouvement de pivotement sur ledit deuxième secteur, entraîner les bras 35 en pivotement. Le pivotement de la came 36 sur ledit premier secteur est donc un pivotement d'actionnement du verrou 22 tandis que le pivotement de la came 36 sur ledit deuxième secteur est un pivotement d'entraînement des bras 35 en pivotement.

Le frein 37 est, de manière classique, destiné à porter directement contre la roue 5. Il est monté pivotant sur les bras 35 et est rappelé dans une position distante de la roue 5 au moyen de ressorts en épingle 44 montés sur les pièces 45 formant la broche qui constitue l'axe de pivotement de ce frein 37.

L'ensemble de direction 3 comprend (cf. figure 3) un tube inférieur 50 monté pivotant dans le tube 19 de la potence 16, un tube supérieur 51 dépliable et repliable de manière télescopique par rapport à ce tube inférieur 50, un tube de guidon 52 déployable manuellement, un guidon 53 et des bagues à serrage radial 54, permettant d'immobiliser le tube supérieur 51 par rapport au tube inférieur 50 et le tube de guidon 52 par rapport au tube supérieur 51.

Comme le montrent les figures 2 et 3, le tube inférieur 50 comporte la fourche inférieure 60 de montage de la roue avant 4 et comprend un mât interne axial 61 dépassant son extrémité supérieure. En référence à la figure 3A, il apparaît que ce mât 61 comprend à son extrémité libre, une structure de verrouillage 62 de type "à baïonnette", un ergot axial 63 rappelé par un ressort 64 et, en dessous de ladite structure 62, une poulie 65 d'axe transversal au mât 61.

Le guidon 53 comprend une partie fixe 66 formant une branche du guidon et un tube coulissant 67 engagé dans cette partie fixe 66, ce tube 67 étant mobile entre une position de repliage dans laquelle il est rétracté dans la partie fixe 66 (cf. figures 1 et 2) et une position de sortie dans laquelle il forme la deuxième branche du guidon 53. Le tube 67 est sollicité vers sa position sortie par un ressort et comprend deux trous venant en engagement réversible sur l'ergot axial 63 respectivement dans lesdites positions de repliage et de sortie, ces engagements maintenant ce tube 67 dans ces positions.

Le guidon 53 comprend également une structure inférieure de verrouillage de type "à baïonnette", complémentaire de la structure 62. Dans la position du guidon 53 montrée sur les figures 1 et 2, ces deux structures de verrouillage sont en prise ; dans la position d'utilisation, dans laquelle les branches du guidon 53 sont parallèles à l'axe de la roue 4, ces structures sont hors de prise, libérant le coulissement des tubes 51 et 52 par rapport au tube et, au-delà, libérant le coulissement de la partie arrière 17 de la plate-forme par rapport à la partie avant 15 de cette plate-forme.

Les bagues 54 comprennent chacune deux parties dont une, extérieure, est vissable par rapport à l'autre, intérieure, ce vissage permettant de réaliser un serrage de languettes de la partie intérieure contre le tube traversant la bague et de verrouiller ainsi ce tube par rapport au tube extérieur.

Le câble 12 forme une transmission entre les parties avant 15 et arrière 17 de la plateforme et le tube 51 et un moyen d'actionnement de l'ensemble pivotant 23 et de la came pivotante 36. Pour ce faire, le câble 12 est relié à ladite partie avant 15 et comprend une première partie s'étendant le long des parties avant 15 et arrière 17 de la plateforme, passant ensuite au travers du conduit médian inférieur 32 du verrou 22 (cf. figures 4 à 4B), puis passant sur la came pivotante 36 et étant fixée à celle-ci par la broche 43 (cf. figure 3) ; une deuxième partie de ce câble 12 s'étend, depuis ce point de fixation du câble 12 sur la came 36, au travers du conduit médian supérieur 32 du verrou 22, puis à nouveau le long des parties avant 15 et arrière 17 de plateforme, pénètre ensuite dans une gaine reliant l'extrémité avant de la partie avant 15 et la fourche 60, forme un mouflage sur la poulie 65 que comporte ledit mât interne 61 puis est reliée à la partie inférieure du tube supérieur 51.

En pratique, à partir de la position de repliage du véhicule (cf. figures 1 et 2), le guidon 53 est déplacé dans la position d'utilisation, ce qui libère les structures à baïonnette respectives de ce guidon 53 et du mât 61 l'une par rapport à l'autre. Cette libération libère le coulissement de la partie arrière 17 de plateforme par rapport à la partie avant 15 de plateforme sous l'effet des moyens élastiques agissant entre ces deux parties 15 et 17. Cette libération efface également l'ergot 63 et libère le coulissement du tube 67 de guidon vers sa position sortie.

Le déplacement de ladite partie arrière 17 par rapport à ladite partie avant 15 vers sa position de dépliage exerce tout d'abord une traction sur ladite première partie du câble 12, provoquant le pivotement de la came 36 sur ledit premier secteur, puis, à partir de l'arrivée de la came 36 dans ledit deuxième secteur, le pivotement de l'ensemble arrière pivotant 23 ; à partir de cette arrivée de la came dans ce deuxième secteur, le déplacement de ladite partie arrière 17 exerce également une traction sur ladite deuxième partie du câble 12, réalisant ainsi le dépliage télescopique du tube 51 par rapport au tube 50.

En fin de pivotement de l'ensemble arrière pivotant 23, les extensions 40 des bras 35 se trouvent en face des cavités 29 du verrou 22, et la came 36 libère le coulissement de ce verrou 22 vers sa position normale arrière, de verrouillage de ces extensions 40 dans ces cavités 29, et donc de verrouillage des bras 35 dans la position de dépliage.

Le tube 52 est ensuite déployé puis les bagues 54 sont serrées.

Inversement, à partir de la position dépliée du véhicule 1, après desserrage des bagues 54, le tube 52 est rétracté, puis une pression est exercée sur le tube 51, réalisant une traction sur ladite deuxième partie du câble ; cette traction provoque le pivotement de la came 36 sur ledit premier secteur du mouvement de cette came, qui réalise l'actionnement du verrou 22 en position avant d'effacement, et donc le déverrouillage du pivotement de l'ensemble arrière pivotant 23, et simultanément le déplacement de ladite partie arrière 17 de la plate-forme en position de repliage par rapport à ladite partie avant 15 de la plate-forme.

En référence à la figure 10, il apparaît que le récipient 100 comprend une cavité de montage 101 de forme correspondant à celle de la partie de montage que forme le pied 18 et les nervures 21, apte à recevoir de manière ajustée cette partie de montage, avec léger coincement. Le récipient 100 comprend des cotés longs 100a et des côtés courts 100b, et la cavité de montage 101 est aménagée au niveau de la partie inférieure de l'un de ces côtés longs 100a, sensiblement au centre de celui-ci. Ainsi que cela est visible sur la figure 12, le récipient 100 peut être monté sur le véhicule 1 avec ses côtés longs 100a s'étendant transversalement au plan avant-arrière du véhicule 1, pour l'obtention d'un positionnement équilibré du récipient 100 sur ce véhicule 1.

Il est également visible sur cette figure, comme déjà mentionné, qu'une chaussure C d'un utilisateur peut être engagée entre le récipient 100 ainsi monté et la plateforme 2, du fait de la hauteur du pied 18 et de la hauteur à laquelle se réalise le coincement de ce pied et des nervures 21 qu'il comprend dans la cavité 101.

Dans l'exemple représenté, le récipient 100 comprend également des roulettes inférieures 102 et une poignée rétractable 103 (représentée en position rétractée sur la figure 10). Cette poignée 103 peut être déployée pour permettre une traction du récipient 100 lorsque celui-ci roule sur le sol grâce aux roulettes 102. Ce récipient 100 comprend avantageusement un compartiment interne apte à recevoir le véhicule 1 en position de repliage.

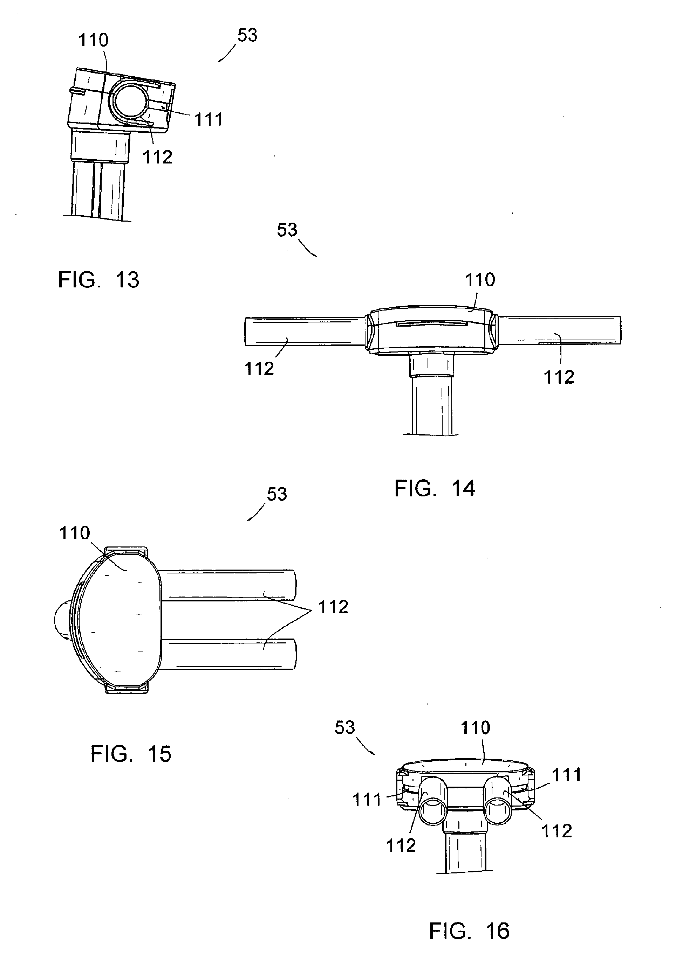

Les figures 13 à 19 montrent une variante de réalisation du guidon 53. Selon cette variante, le guidon 53 comporte un corps central 110 formant deux fentes latérales 111 en quart de cercle sur ses côtés; et deux poignées 112 montées pivotantes sur ce corps central 110 et mobiles entre la position de dépliage montrée sur les figures 13, 14 et 17 et la position de repliage montrée sur les figures 15, 16 et 19.

L'organe de verrouillage 62 solidaire de l'extrémité libre du mât 61 est, dans ce cas, sous forme d'un plot à tête élargie, formant un épaulement en dessous de cette tête.

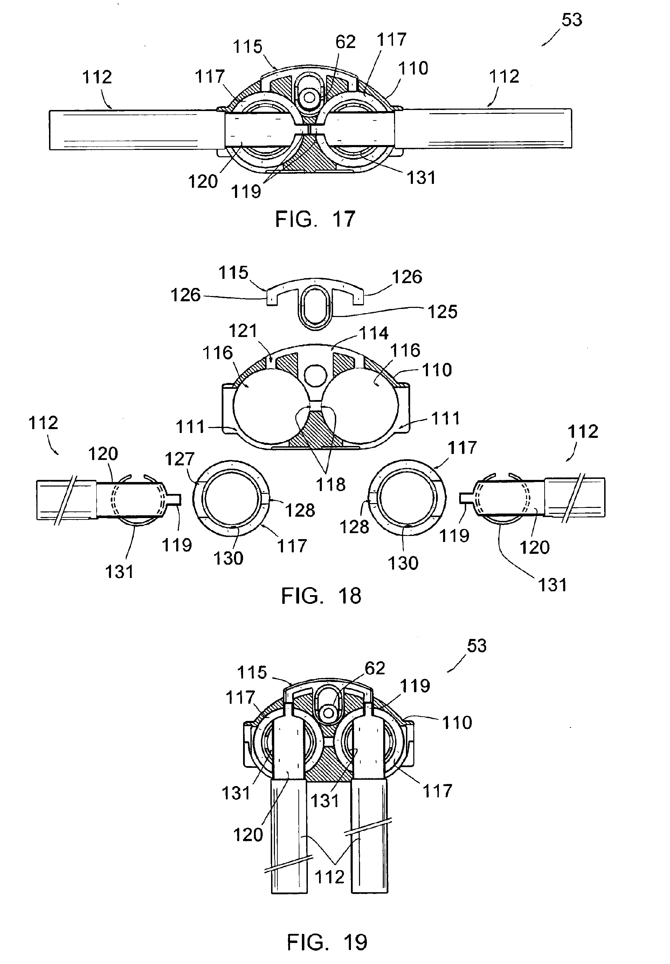

Comme le montre particulièrement la figure 18, le corps central 110 forme une cavité avant 114 de réception et coulissement d'un bouton-poussoir 115, deux évidements circulaires arrières 116, de réception de bagues 117 de guidage des poignées 112 en pivotement, deux logements médians 118 communiquant radialement avec les évidements circulaires 116, de réception d'ergots de verrouillage 119 que comportent des extension internes 120 des poignées 112, et des conduits latéraux 121 faisant communiquer ladite cavité avant 114 avec chacun desdits évidements circulaires 116.

En position de complet repliage du véhicule 1, l'organe de verrouillage 62 débouche dans la zone médiane de la cavité avant 114, avec l'épaulement formé par la tête de cet organe 62 situé au-dessus du fond de cette cavité 114.

Le bouton-poussoir 115 est coulissant dans la cavité avant 114 et dépasse de la face du corps 110 tournée vers l'avant du véhicule. Ce bouton-poussoir 115 comprend une portion centrale 125 et deux extensions latérales 126. La portion centrale 125 délimite une lumière orientée d'avant en arrière, dont la partie tournée du côté de l'avant du véhicule est dimensionnée pour permettre le passage de la tête de l'organe de verrouillage 62 au travers d'elle, et dont la partie tournée du côté de l'arrière du véhicule est dimensionnée de telle sorte que la portion centrale 125 soit apte à venir en engagement contre le dessous de la tête de l'organe de verrouillage 62. Chaque extension latérale 126 se prolonge par un doigt d'actionnement, dirigé parallèlement à l'axe longitudinal de ladite lumière, qui coulisse dans le conduit 121 correspondant.

Le bouton-poussoir 115 est maintenu normalement, par un moyen élastique non représenté, dans la position montrée sur la figure 17, dans laquelle sa portion centrale 125 est en prise avec l'organe de verrouillage 62 et maintien par conséquent l'ensemble du véhicule en position de repliage.

Chaque bague 117 est reçue de manière ajustée, mais avec possibilité de pivotement, dans un évidement circulaire 116 correspondant, de telle sorte que ce dernier agit comme un palier de guidage de ce pivotement. La bague 117 est cependant interrompue pour former deux passages 127, 128 au travers d'elle, dont un permet l'engagement coulissant de l'extension 120 que comprend la poignée 112 correspondante et dont l'autre permet l'engagement coulissant de l'ergot 119 de cette même extension 120.

Chaque bague 117 présente une gorge interne 130 formant un logement de réception d'un ressort 131 en forme d'anneau ouvert. Après montage, la branche la plus interne de ce ressort 131 est, au niveau de la base de l'ergot 119, en butée contre l'extension 120 tandis que la branche la plus externe de ce ressort 131 est en appui contre la bague 117. Ce ressort 131 rappelle ainsi la poignée 112 dans la position de coulissement correspondant à l'engagement de l'ergot 119 dans le logement 118.

La poignée 112 est ainsi mobile en translation par rapport à la bague 117 correspondante, entre une position normale de verrouillage, dans laquelle ledit ergot 119 est engagé soit le logement médian 118 (cf. figure 17), soit dans le conduit latéral 121 (cf. figure 19), et une position de déverrouillage, dans laquelle cet ergot 119 est rétracté de manière à être extrait du logement médian 118 ou du conduit latéral 121 et se trouve donc dans le périmètre de la bague 117, ne faisant ainsi pas obstacle au pivotement de celle-ci et donc de la poignée 112.

En pratique, lorsque les poignées sont dans leur position de repliage (cf. figure 19), les ergots 119 se trouvent dans les conduits latéraux 121 ; pour opérer le dépliage du véhicule 1, l'utilisateur appuie sur le bouton-poussoir 115, ce qui a pour effet simultanément d'amener ladite portion centrale 125 à libérer l'organe de verrouillage 62 et d'amener les doigts 126 à extraire les ergots 119 des conduits 121. Cette extraction libère le pivotement de l'ensemble bague 117-poignée 112, lequel est amené en position de dépliage. Dans cette position, les ergots 119 pénètrent dans les logements 118, ce qui verrouille les poignées 112.

Pour opérer le repliage du véhicule, l'utilisateur tire sur les poignées 112 de manière à extraire les ergots 119 hors des logements 118 et amène ces poignées 112 en position de repliage ; le retour des ergots 119 dans les conduits 121 réalise le verrouillage des poignées 112 dans cette position.

L'utilisateur appuie ensuite sur ledit corps central 110 pour ramener l'organe de verrouillage 62 en prise avec le bouton-poussoir 115.

Comme cela apparaît de ce qui précède, l'invention fournit un véhicule 1 présentant les avantages déterminants de pouvoir être replié sous un faible volume et d'être aisé à manipuler. L'invention fournit également un ensemble incluant ce véhicule et un récipient de type sacoche ou cartable permettant une combinaison avantageuse de ce véhicule et de ce récipient.

L'invention a été décrite ci-dessus en référence à une forme de réalisation fournie à titre d'exemple. Il va de soi qu'elle n'est pas limitée à cette forme de réalisation mais qu'elle s'étend à toutes les autres formes de réalisations couvertes par les revendications ci-annexées. Ainsi, le pivotement de chaque poignée 112 pourrait être rendu automatique, au moyen d'un ressort de torsion interposé entre le corps central 110, au niveau de l'évidement 116, et l'extension interne 120 de la poignée ; un tel ressort pourrait notamment être hélicoïdal et avoir une extrémité reposant contre une surface d'appui formé par le corps 110, au niveau de la paroi de ce corps délimitant la périphérie de l'évidement 116, l'autre extrémité du ressort reposant contre une surface d'appui homologue formée par ladite extension 120.

## Revendications

1. Véhicule dépliable (1) à deux roues, comprenant une plate-forme (2) sur laquelle un utilisateur peut prendre place, un ensemble de direction (3) comprenant une colonne de direction (20) portant une roue avant, située sur l'avant de la plate-forme (2), et une roue arrière (5) située à l'arrière de la plate-forme (2) ; la plate-forme (2) étant en deux parties (10, 11), à savoir une partie avant (10) et une partie arrière (11) mobile par rapport à la partie avant (10), cette partie arrière (11) étant mobile entre une position de repliage, dans laquelle elle est rétractée par rapport à la partie avant (10), et une position de dépliage, dans laquelle elle est située dans le prolongement de la partie avant (10) ; la colonne de direction (20) comprenant une partie inférieure (50) et au moins une partie supérieure (51) dépliable et repliable de manière télescopique par rapport à la partie inférieure (50) ;
**caractérisé en ce que** le véhicule (1) inclut une transmission (12) entre ladite partie avant (10) de plate-forme et ladite partie supérieure (51) de la colonne de direction (20), agencée de telle sorte que le dépliage de la partie arrière (11) de la plate-forme réalise le dépliage de la partie supérieure (51) de la colonne de direction (20) et, inversement, que le repliage de la partie supérieure (51) de la colonne de direction (20) réalise le repliage de la partie arrière (11) de la plate-forme.

2. Véhicule (1) selon la revendication 1, **caractérisé en ce que** la partie arrière (11) de la plateforme comprend un ensemble arrière pivotant (23) sur lequel est montée la roue arrière (5) du véhicule, cet ensemble (23) étant mobile entre une position de repliage, dans laquelle il est rabattu du côté de ladite partie arrière (11), et une position de dépliage dans laquelle il se positionne sensiblement dans le prolongement de cette partie arrière (11), les positions de repliage et de dépliage de cet ensemble (23) correspondant respectivement aux positions de repliage et de dépliage du véhicule (1).

3. Véhicule (1) selon la revendication 2, **caractérisé en ce que** :
- l'ensemble arrière pivotant (23) comprend deux bras (35) montés pivotants sur deux branches (26) solidaires de ladite partie arrière (11) de la plateforme ; la roue arrière (5) est montée entre ces deux bras (35), du côté des extrémités arrières de ceux-ci, et ces bras (35) comportent, du côté de leurs extrémités avant, des extensions de verrouillage (40) ;
- lesdites branches (26) comportent un verrou (22) monté coulissant sur elles, comprenant deux cavités (29) propres à recevoir lesdites extensions de verrouillage (40) dans la position de dépliage de l'ensemble arrière pivotant (23), ce verrou (22) étant sollicité dans une position de verrouillage par des moyens élastiques ; le verrou (22) est mobile longitudinalement sur lesdites branches (26) entre cette position de verrouillage, dans laquelle il est apte à recevoir lesdites extensions de verrouillage (40) dans lesdites cavités (29), réalisant de ce fait le verrouillage de l'ensemble arrière pivotant (23) en position de dépliage, et une position d'effacement, dans laquelle il libère lesdites extensions de verrouillage (40) desdites cavités (29) et ne fait ainsi pas obstacle au pivotement desdits bras (35) ;
- l'ensemble arrière pivotant (23) comprend un organe (36) de commande du verrou (22), actionné par ladite transmission (12).

4. Véhicule (1) selon la revendication 3, **caractérisé en ce que** cet organe de commande du verrou (22) est une came pivotante (36), non liée en pivotement auxdits bras (35) sur un premier secteur de son mouvement de pivotement et liée en pivotement auxdits bras (35) sur un deuxième secteur de son mouvement de pivotement, ce deuxième secteur étant consécutif au premier secteur ; cette came (36) est conformée pour, au cours de son pivotement sur ledit premier secteur, actionner le verrou (22) de sa position de verrouillage vers sa position d'effacement, et, au cours de son pivotement sur ledit deuxième secteur, entraîner lesdits bras (35) en pivotement.

5. Véhicule (1) selon la revendication 4, **caractérisé en ce que** ladite transmission comprend un câble (12) relié à ladite partie avant (10) du véhicule, dont une première partie s'étend le long des parties avant (15) et arrière (17) de la plateforme, passe sur ladite came pivotante (36) et est fixée à celle-ci, et dont une deuxième partie s'étend, depuis le point de fixation du câble (12) sur la came (36), à nouveau le long des parties avant (15) et arrière (17) de la plateforme, pénètre ensuite dans la colonne de direction (20), forme un mouflage sur une poulie supérieure (65) que comporte ladite partie inférieure de la colonne de direction (20) puis est reliée à la partie inférieure de ladite partie supérieure (51) de cette colonne de direction (20) ; à partir de la position de repliage du véhicule (1), le déplacement de ladite partie arrière (17) de la plateforme par rapport à ladite partie avant (15) de la plateforme vers sa position de dépliage exerce tout d'abord une traction sur ladite première partie du câble (12), provoquant le pivotement de la came (36) sur ledit premier secteur, puis, à partir de l'arrivée de la came (36) dans ledit deuxième secteur, le pivotement de l'ensemble arrière pivotant (23) ; à partir de cette arrivée de la came (36) dans ce deuxième secteur, le déplacement de ladite partie arrière (17) de la plateforme exerce également une traction sur ladite deuxième partie du câble (12), réalisant ainsi le dépliage télescopique de la partie supérieure (51) de la colonne de direction (20) par rapport à la partie inférieure (50) de celle-ci.

6. Véhicule (1) selon l'une des revendications 1 à 5, **caractérisé en ce qu'**il comprend une partie (52) de colonne de direction (20) déployable manuellement, en particulier la partie (52) de colonne de direction (20) reliée au guidon (53).

7. Véhicule (1) selon l'une des revendications 1 à 6, **caractérisé en ce qu'**il comprend un guidon (53) formé par un tube relié perpendiculairement à la colonne de direction (20), ce guidon (53) comprenant une partie fixe (66) et une partie mobile (67), dépliable et repliable par rapport à cette partie fixe (66).

## Patentansprüche

1. Ein Ausziehbares Zweirädriges Fahrzeug (1) mit einer Plattform (2), auf dem ein Benutzer sich selbst zu positionieren, eine Lenkanordnung (3), umfassend eine Lenksäule (20) mit einem Vorderrad, an der Vorderseite der Plattform angeordnet die Plattform (2) aus zwei Teilen (10, 11), einem vorderen Teil (10) gebildet und einem hinteren Teil (11) und einem Hinterrad (5) an der Rückseite der Plattform (2) befindet, die in Bezug auf den vorderen Teil (10) bewegbar ist, wobei der hintere Teil (11) zwischen einer gefalteten Position, in der es in Bezug auf den vorderen Teil (10) zurückgezogen ist, und einer ungefalteten Position bewegbar, in der sie in der Verlängerung des vorderen Teils (10) angeordnet ist, die Lenksäule (20) einen unteren Teil (50) und mindestens einen oberen Teil (51), die entfaltet werden können und teleskopartig gefaltet in Bezug auf den unteren Teil (50);
**dadurch gekennzeichnet, dass** das Fahrzeug (1) ein Getriebe (12) zwischen dem vorderen Teil (10) der Plattform und der obere Teil (51) der Lenksäule (20) angeordnet ist, so dass die Entfaltung hinteren Teil (11) die Plattform bewirkt, dass der obere Teil (51) der Lenksäule (20) zu entfalten, und umgekehrt, Falten des oberen Teils (51) der Lenksäule (20) bewirkt, dass der hintere Teil (11) der Plattform geklappt werden.

2. Fahrzeug (1) nach Anspruch 1, **dadurch gekennzeichnet, dass** der hintere Teil (11) der Plattform ein Schwenken der hinteren Baugruppe (23), an dem das Hinterrad (5) des Fahrzeugs gelagert ist, wobei die Anordnung (23) zwischen einer gefalteten Position, in der es sich auf der Seite des hinteren Teils (11) gefaltet ist, und einer ungefalteten Position, in welcher er im wesentlichen in der Verlängerung positioniert beweglichen hinteren Teils (11), der Faltung und Entfaltung Positionen dieser Baugruppe (23) jeweils an der Faltung und Entfaltung entsprechenden Positionen des Fahrzeugs (1).

3. Fahrzeug (1) nach Anspruch 2, **dadurch gekennzeichnet, dass**:
- Das Schwenken der hinteren Baugruppe (23) zwei Arme (35) schwenkbar auf zwei Zweige (26) montiert befestigt an dem hinteren Teil (11) der Plattform, das Hinterrad (5) zwischen diesen beiden Armen (35) angebracht ist, auf der Seite der hinteren Enden, und wobei die Arme (35) umfassen Verriegelungsfortsätze (40) auf der Seite ihrer Vorderenden ;
- Die Schenkel (26) einen Bolzen (22) gleitend angebracht darauf, die zwei Hohlräume (29) geeignet zum Empfang der Verriegelungsfortsätze (40) in der aufgeklappten Position der hinteren Schwenkeinheit (23), wobei der Bolzen (22) betonte in einer Verriegelungsstellung durch elastische Mittel, die Schraube (22) in Längsrichtung beweglich an dem Schenkel (26) zwischen der verriegelten Position, in der sie empfangen kann der Verriegelungsfortsätze (40) in die Hohlräume (29), wodurch der Schwenkverriegelungs Heckanordnung (23) in der ausgeklappten Position und einer zurückgezogenen Position, in der es befreit die Verriegelungsfortsätze (40) der Hohlräume (29) und somit ist das Schwenken der Arme (35) nicht behindert ;
- Das Schwenken der hinteren Baugruppe (23) ein Steuerglied (36) des Bolzens (22), betätigt durch weist das Getriebe (12).

4. Fahrzeug (1) nach Anspruch 3, **dadurch gekennzeichnet, dass** das Steuerteil des Riegels (22) eine schwenkbare Nocke (36) nicht drehbar an den Armen (35) auf einem ersten Bereich der Schwenkbewegung verbunden ist, und schwenkbar verbunden sind, um die Arme (35) auf einem zweiten Bereich der Schwenkbewegung, wobei der zweite Bereich benachbart zu dem ersten Sektor, das Nocken (36) so konfiguriert ist, während der Schwenkbewegung auf dem ersten Bereich, um den Riegel zu betätigen, (22) von seiner Verriegelungsposition zu seiner zurückgezogenen Position befindet, und während ihrer Schwenkbewegung auf dem zweiten Bereich, um die Schwenkarme (35).

5. Fahrzeug (1) nach Anspruch 4, **dadurch gekennzeichnet, dass** das Getriebe ein Kabel (12) verbunden ist, um dem vorderen Teil (10) des Fahrzeugs, wobei ein erster Teil davon erstreckt sich entlang der Vorderseite (15) und hinteren Teile (17) der Plattform geht über die Schwenksteuerkurve (36) und an dieser befestigt ist, und von denen ein zweiter Teil erstreckt sich von der Befestigungsstelle des Kabels (12) auf dem Nocken (36) wieder längs der Vorderseite (15) und die hinteren Abschnitte (17) der Plattform, dringt dann die Lenksäule (20) bildet, ein Empfangssystem auf einer oberen Riemenscheibe (65) enthalten ist, durch das untere Teil der Lenksäule (20), dann ist mit dem unteren Teil verbunden ist der obere Teil (51) der Lenksäule (20) von der gefalteten Position des Fahrzeugs (1), wobei die Bewegung des hinteren Teils (17) der Plattform in Bezug auf den vorderen Teil (15) der Plattform in Richtung seiner ausgeklappten Position zunächst auf dem ersten Teil des Kabels (12) eine Zugkraft ausübt, so dass die Nocken (36) schwenkbar auf dem ersten Bereich, dann, sobald der Nocken (36) kommt in dem zweiten Sektor, bewirkt, dass der hintere Schwenkbaugruppe (23) zu schwenken, sobald der Nocken (36) kommt in der zweiten Sektor, wobei die Bewegung des hinteren Teils (17) der Plattform übt eine Zugkraft auf das zweite Teil des Kabels (12), wodurch der teleskopierbare Entfalten des oberen Teils (51) der Lenksäule (20) Durchführen in Bezug auf den unteren Teil (50) davon.

6. Fahrzeug (1) nach einem der Ansprüche 1-5, **dadurch gekennzeichnet, dass** es eine von Hand ausfahrbare Lenksäule (20) Teil (52), insbesondere der Lenksäule (20) Teil (52) an der Lenkstange verbunden ist (53).

7. Fahrzeug (1) nach einem der Ansprüche 1-6, **dadurch gekennzeichnet, dass** Lenker (53) aufweist, hergestellt aus einem Rohr senkrecht zu der Lenksäule (20) verbunden ist, wobei der Lenker (53) mit einem stationären Teil (66) und einem beweglichen Teil (67), die entfaltet und in Bezug auf die gefaltet werden kann von dem stationären Teil (66).

## Claims

1. A foldable two-wheel vehicle (1) comprising a platform (2) on which a user may position himself, a steering assembly (3) comprising a steering column (20) with a front wheel, situated at the front of the platform (2), and a rear wheel (5) situated at the rear of the platform (2); the platform (2) being made from two parts (10, 11), i.e. a front part (10) and a rear part (11) that is movable in relation to the front part (10), said rear part (11) being movable between a folded position, in which it is retracted in relation to the front part (10), and an unfolded position, in which it is situated in the extension of the front part (10); the steering column (20) comprising a lower part (50) and at least one upper part (51) that can be unfolded and folded telescopically in relation to the lower part (50);
**characterized in that** the vehicle (1) includes a transmission (12) between said front part (10) of the platform and said upper part (51) of the steering column (20), arranged so that unfolding the rear part (11) of the platform causes the upper part (51) of the steering column (20) to unfold and, conversely, folding the upper part (51) of the steering column (20) causes the rear part (11) of the platform to be folded.

2. Vehicle (1) according to claim 1, **characterized in that** the rear part (11) of the platform comprises a pivoting rear assembly (23) on which the rear wheel (5) of the vehicle is mounted, said assembly (23) being movable between a folded position, in which it is folded down on the side of the rear part (11), and an unfolded position, in which it is positioned substantially in the extension of said rear part (11), the folding and unfolding positions of this assembly (23) respectively corresponding to the folding and unfolding positions of the vehicle (1).

3. Vehicle (1) according to claim 2, **characterized in that**:
- the pivoting rear assembly (23) comprises two arms (35) pivotably mounted on two branches (26) secured to said rear part (11) of the platform; the rear wheel (5) is mounted between those two arms (35), on the side of the rear ends thereof, and said arms (35) include locking extensions (40) on the side of their front ends;
- said branches (26) include a bolt (22) slidingly mounted thereon, comprising two cavities (29) capable of receiving said locking extensions (40) in the unfolded position of the pivoting rear assembly (23), said bolt (22) being stressed in a locking position by elastic means; the bolt (22) is longitudinally movable on said branches (26) between the locked position, in which it can receive said locking extensions (40) in said cavities (29), thereby locking the pivoting rear assembly (23) in the unfolded position, and a retracted position, in which it frees said locking extensions (40) of said cavities (29) and thus does not hinder the pivoting of said arms (35);
- the pivoting rear assembly (23) comprises a control member (36) of the bolt (22), actuated by said transmission (12).

4. Vehicle (1) according to claim 3, **characterized in that** said control member of the bolt (22) is a pivoting cam (36), not pivotably connected to the arms (35) on a first sector of the pivoting movement, and pivotably connected to said arms (35) on a second sector of the pivoting movement, said second sector being adjacent to the first sector; this cam (36) is configured so as, during its pivoting movement on said first sector, to actuate the bolt (22) from its locking position toward its retracted position, and, during its pivoting movement on said second sector, to pivot said arms (35).

5. Vehicle (1) according to claim 4, **characterized in that** said transmission comprises a cable (12) connected to said front part (10) of the vehicle, a first part of which extends along the front (15) and rear parts (17) of the platform, passes over said pivoting cam (36) and is fixed thereto, and whereof a second part extends, from the fastening point of the cable (12) on the cam (36), again along the front (15) and rear portions (17) of the platform, then penetrates the steering column (20), forms a receiving system on an upper pulley (65) included by said lower part of said steering column (20), then is connected to the lower part of said upper part (51) of said steering column (20); from the folded position of the vehicle (1), the movement of said rear part (17) of the platform in relation to said front part (15) of the platform toward its unfolded position first exerts a pulling force on said first part of the cable (12), causing the cam (36) to pivot on said first sector, then, once the cam (36) arrives in said second sector, causes the rear pivoting assembly (23) to pivot; once the cam (36) arrives in said second sector, the movement of said rear part (17) of the platform also exerts a pulling force on said second part of the cable (12), thereby performing the telescoping unfolding of the upper part (51) of the steering column (20) in relation to the lower part (50) thereof.

6. Vehicle (1) according to any of claims 1-5, **characterized in that** it comprises a manually deployable steering column (20) portion (52), in particular the steering column (20) portion (52) connected to the handle bars (53).

7. Vehicle (1) according to any of claims 1-6, **characterized in that** it comprises handlebars (53) made up of a tube perpendicularly connected to the steering column (20), said handlebars (53) comprising a stationary part (66) and a moving part (67), which can be unfolded and folded in relation to said stationary part (66).
